# EUROPEAN PATENT APPLICATION

(11) **EP 4 657 130 A1**
(43) Date of publication of application: **03.12.2025**
(21) Application number: 24223399.7
(22) Date of filing: 27.12.2024
(51) Int. Cl.: G02B 7/02, G03B 17/55, H04N 23/52, G02B 27/00

(54) **HEATING LENS WITH THERMAL-INSULATION MECHANISM**

(30) Priority: 30.05.2024 TW 113119980
(71) Applicant: Eterge Opto-Electronics Co., Ltd., Taichung City 408 (TW); Zhong Yang Technology Co., Ltd., Taichung City 408 (TW)
(72) Inventor: HSU, Chih-Cheng, 408 Taichung City (TW); LEE, Tsu-Meng, 408 Taichung City (TW); LI, Yun-Xian, 408 Taichung City (TW); CHIANG, Chien-Chun, 408 Taichung City (TW)
(74) Representative: Viering, Jentschura & Partner mbB Patent- und Rechtsanwälte

(57) **Abstract**

A heating lens comprises a lens barrel, a lens, a heating device, and a heat-insulating block. The heat-insulating block is an integrally formed member and is located between the cylinder of the lens barrel and the lens. The heat-insulating block further includes an annular heat-insulating base located at the cylinder, an annular heat-insulating wall standing on the annular heat-insulating base, an annular heat-insulating upper flange standing on the annular heat-insulating base and positioned opposite to the annular heat-insulating wall, and an annular slot formed between the annular heat-insulating wall and the annular heat-insulating upper flange. The annular heat-insulating wall is in contact with the lens. The annular slot accommodates the annular heating plate.

## Description

### FIELD OF THE INVENTION

The present invention relates to a heating lens, and more particularly, to a heating lens equipped with a thermal-insulation mechanism.

### BACKGROUND OF THE INVENTION

Currently, heating lens assembly with heating functions primarily uses a heating device to heat a front lens within a lens barrel to remove fog, frost, or ice from the surface of the front lens. However, the heat applied to the front lens by the heating device is often absorbed by the metal lens barrel, which disperses the heat, making it hard to improve the heating efficiency of the front lens. Additionally, the heat absorption by the lens barrel leads to thermal expansion, potentially altering the predetermined spacing between internal lenses (including the front lens), thereby causing image resolution issues.

Therefore, there is an urgent need for a new heating lens that can enhance the heating efficiency of its front lens while maintaining the predetermined spacing between internal lenses and resolving the image resolution issues described above.

### SUMMARY OF THE INVENTION

In one aspect the invention is directed to a heating lens comprises a lens barrel, a lens, a heating device and a heat-insulating block. The lens barrel includes a cylinder and a front cover. The lens is disposed between the cylinder and the front cover and has an annular wall and an annular bottom wall adjacent to the annular wall. The heating device includes an annular heating plate disposed on the annular bottom wall of the lens and a wire portion connected to the annular heating plate. The heat-insulating block is an integrally formed member located between the cylinder and the lens, and includes an annular heat-insulating base located at the cylinder, an annular heat-insulating wall standing on the annular heat-insulating base, an annular heat-insulating upper flange standing on the annular heat-insulating base and positioned opposite to the annular heat-insulating wall, and an annular slot formed between the annular heat-insulating wall and the annular heat-insulating upper flange. The annular heat-insulating wall is in contact with the lens, the annular heat-insulating upper flange is located below the annular bottom wall of the lens, and the annular slot accommodates the annular heating plate.

In another aspect, the annular heat-insulating wall of the heat-insulating block of the invention is in contact with the annular wall of the lens.

In another aspect, the annular heating plate of the heating device of the invention includes an upwardly protruding ring portion, the ring portion surrounding and is in contact with the annular wall of the lens, the annular heat-insulating wall surrounding the ring portion and is partially in contact with the annular wall.

In another aspect, one side of the heat-insulating block of the invention has an aperture communicating with the annular slot, and the wire portion of the heating device passes through the aperture and extends to the outside of the lens barrel.

In another aspect, an annular outer wall of the annular heat-insulating wall of the invention abuts the front cover, and an annular inner wall of the annular heat-insulating wall abuts the annular wall of the lens.

In another aspect, an annular bottom surface of the annular heat-insulating base of the invention abuts an annular top surface of the cylinder.

In another aspect, an annular heat-insulating lower flange of the annular heat-insulating base of the invention protrudes downwardly from the annular bottom surface and abuts an annular side surface of the cylinder.

In another aspect, the annular heat-insulating wall of the invention is in simultaneous contact with both the annular wall and the annular bottom wall of the lens.

In another aspect, the front cover of the invention is joined to the annular heat-insulating wall of the heat-insulating block, and the cylinder is joined to the annular heat-insulating base of the heat-insulating block.

In another aspect, the front cover of the invention is threadedly engaged with the annular heat-insulating wall of the heat-insulating block, and the cylinder is threadedly engaged with the annular heat-insulating base of the heat-insulating block.

### BRIEF DESCRIPTION OF DRAWINGS

FIG. 1 is an exploded perspective view of a heating lens in accordance with the first embodiment of the invention.
FIG. 2 is a schematic cross-sectional view of a heating lens of the present invention.
FIG. 3 is a perspective view of a heat-insulating block of the heating lens of the present invention.
FIG. 4 is a top view of the heat-insulating block of the heating lens the present invention.
FIG. 5 is a schematic cross-sectional view of a heating lens in accordance with a second embodiment of the present invention.
FIG. 6 is a schematic cross-sectional view of a heating lens in accordance with a third embodiment of the present invention.
FIG. 7 is a schematic cross-sectional view of a heating lens in accordance with a fourth embodiment of the present invention.
FIG. 8 is a schematic cross-sectional view of a heating lens in accordance with a fifth embodiment of the present invention.
FIG. 9 is an exploded perspective view of a heating lens in accordance with the fifth embodiment of the invention.

### DETAILED DESCRIPTION OF THE INVENTION

The present invention provides a heating lens that uses a heat-insulating block to concentrate the heat generated by a heating device onto the front lens. This enhances the efficiency of defrosting, defogging, and deicing of the front lens while maintaining the predetermined spacing between the internal lenses, thus resolving the image resolution issues. The following embodiments illustrate how the heating lens of this invention achieves the aforementioned technical effects through the heat-insulating block.

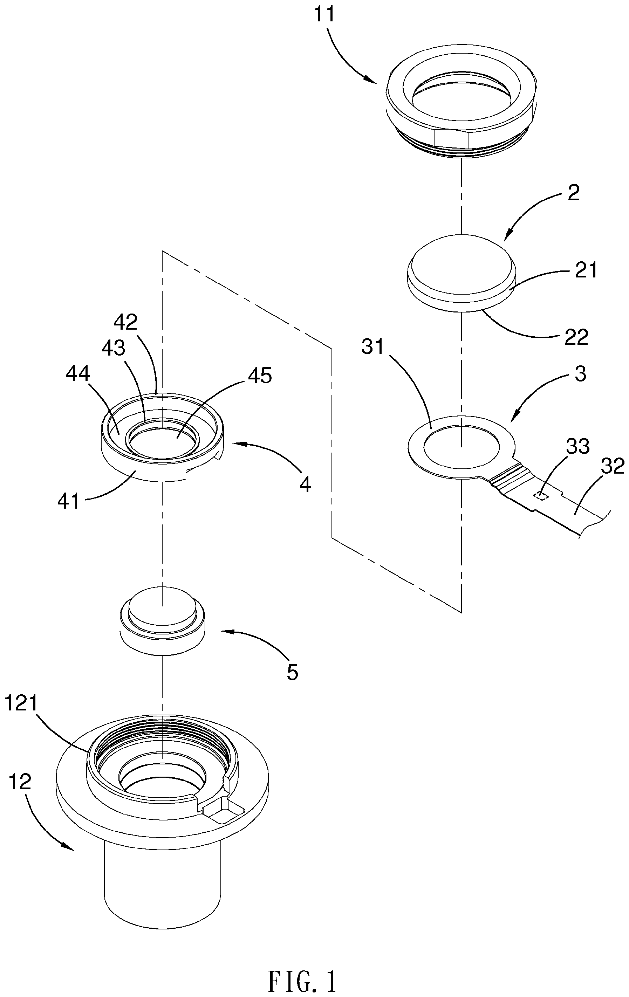

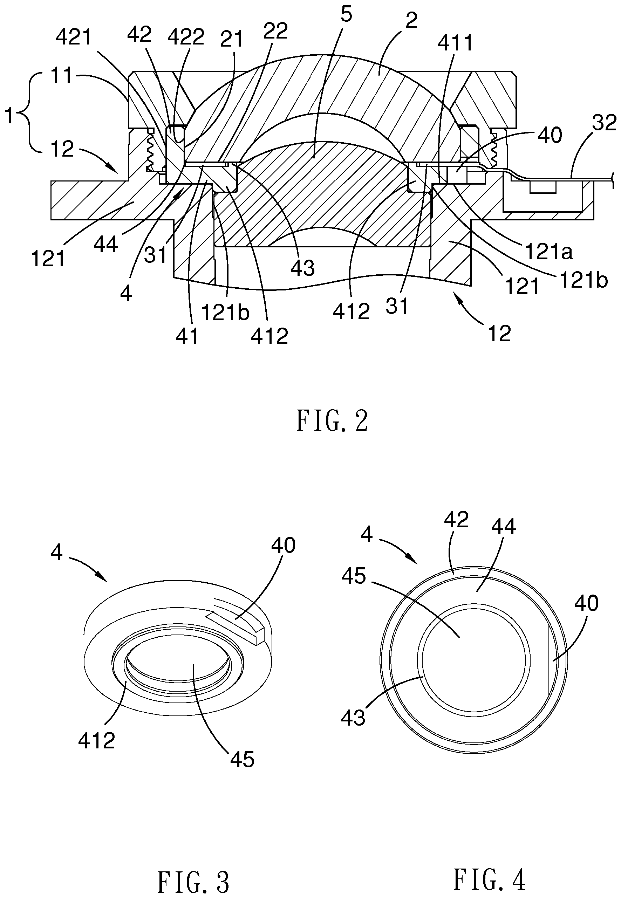

Figures 1 and 2 illustrate a first embodiment of the heating lens according to the present invention, which comprises a lens barrel (1), a lens (2), a heating device (3), and a heat-insulating block (4). The lens barrel (1) includes a front cover (11) and a cylinder (12). The front cover (11) is joined to the front section (121) of the cylinder (12), preferably through threaded engagement but alternatively through adhesive bonding. The lens (2) is positioned between the cylinder (12) and the front cover (11) and has an annular wall (21) and an annular bottom wall (22) adjacent to the side wall (21). In this embodiment, the lens (2) serves as the front lens of the heating lens. The present invention further has other lenses, such as another lens (5) next to the lens (2), within the lens barrel (1).

The heating device (3) comprises an annular heating plate (31) positioned on the annular bottom wall (22) and a wire portion (32) connected to the annular heating plate (31) and extending outside the lens barrel (1). The wire portion (32) is preferably equipped with a temperature sensor (33), which is either a negative temperature coefficient (NTC) thermistor or a positive temperature coefficient (PTC) thermistor.

The heat-insulating block (4) is an integrally formed member located between the cylinder (12) and the lens (2). In one embodiment, the heat-insulating block (4) includes an annular heat-insulating base (41), an annular heat-insulating wall (42) standing from the annular heat-insulating base (41), an annular heat-insulating upper flange (43) opposing the annular heat-insulating wall (42) and also standing from the annular heat-insulating base (41), and an annular slot (44) formed between the annular heat-insulating wall (42) and the annular heat-insulating upper flange (43). The annular heat-insulating wall (42) is in contact with the lens (2), while the annular slot (44) accommodates the annular heating plate (31). The annular heat-insulating upper flange (43) is positioned below the annular bottom wall (22). It may either be in contact with or be slightly spaced from the lens (2). Additionally, the center of the heat-insulating block (4) has an aperture (45). As shown in Figure 2, a portion of another lens (5) is inserted into the aperture (45). However, this is not limited to this; for example, the other lens (5) may be positioned in other locations and does not necessarily need to be inserted into the aperture (45).

As shown in Figure 2, the annular heating plate (31) directly heats the lens (2) by contacting the annular bottom wall (22) of the lens (2). Additionally, the heat-insulating block (4) surrounds the annular heating plate (31), preventing heat generated by the annular heating plate (31) from transferring to the cylinder (12). Therefore, this ensures that the heat generated by the annular heating plate (31) is concentrated on the lens (2), significantly enhancing its defrosting, defogging, and deicing efficiency. On the other hand, by surrounding and isolating the annular heating plate (31) with the heat-insulating block (4), the heat generated by the annular heating plate (31) is difficult to transfer to the cylinder (12) of the lens barrel (1). Therefore, even if the cylinder (12) is made of metal, it will not expand due to heat absorption. This means the heat generated by the annular heating plate (31) has little impact on the cylinder (12), allowing the predetermined spacing of the internal lenses within the cylinder (12) to be maintained. This effectively addresses the issue of image blurriness in conventional lenses.

As shown in Figures 3 and 4, one side of the heat-insulating block (4) has an aperture (40) communicating with the annular slot (44). As shown in Figure 2, the wire portion (32) of the heating device (3) passes through the aperture (40) and extends outside the lens barrel (1).

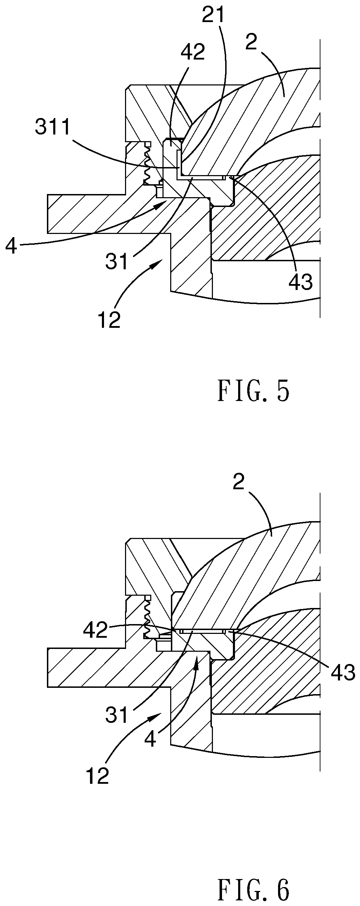

Figure 5 illustrates a second embodiment of the present invention, in which the annular heating plate (31) includes an upwardly protruding ring portion (311). The ring portion (311) surrounds and is in contact with the annular wall (21) of the lens (2). The annular heat-insulating wall (42) surrounds the ring portion (311) and its end is partially in contact with the annular wall (21). In the second embodiment, the ring portion (311) is the extension of the annular heating plate (31). While the annular heating plate (31) heats the annular bottom wall (22), the ring portion (311) heat simultaneously the annular side wall (21), further improving defrosting, defogging, and deicing efficiency described above. Additionally, as the annular heating plate (31) and the ring portion (311) are still surrounded by the heat-insulating block (4), so the heat generated by the annular heating plate (31) and the ring portion (311) is primarily conducted towards the lens (2) and is less likely to transfer in the direction of the cylinder (12).

Preferably, as shown in Figure 2, the annular heat-insulating wall (42) is in contact with the annular wall (21) of the lens (2). However, in the third embodiment as shown in Figure 6, the annular heat-insulating wall (42) may be modified into the annular bottom wall (22) in contact with the lens (2). In the third embodiment, as the annular heating plate (31) is still surrounded by the heat-insulating block (4), the generated heat is still conducted towards the lens (2) and less likely to transfer in the direction of the cylinder (12).

Additionally, as shown in Figure 2, an annular outer wall (421) of the annular heat-insulating wall (42) abuts the front cover (11), while an annular inner wall (422) abuts the annular wall (21) of the lens (2). Preferably, an annular bottom surface (411) of the annular heat-insulating base (41) abuts an annular top surface (121a) of the cylinder (12). More preferably, an annular heat-insulating lower flange (412) of the annular heat-insulating base (41) protrudes downward from the annular bottom surface (411) and abuts against an annular side surface (121b) of the cylinder (12).

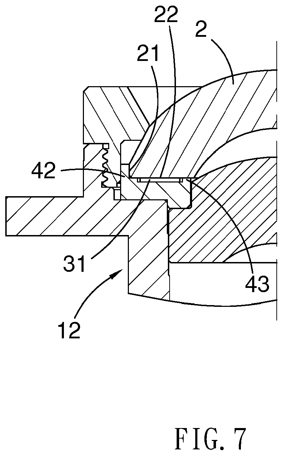

As shown in Figure 7, in the fourth embodiment, the annular heat-insulating wall is in (42) simultaneous contact with the annular wall (21) and the annular bottom wall (22) of the lens (2). In this fourth embodiment, the annular heating plate (31) remains surrounded by the heat-insulating block (4), so the generated heat is conducted towards the lens (2) and less likely to transfer in the direction of the cylinder (12).

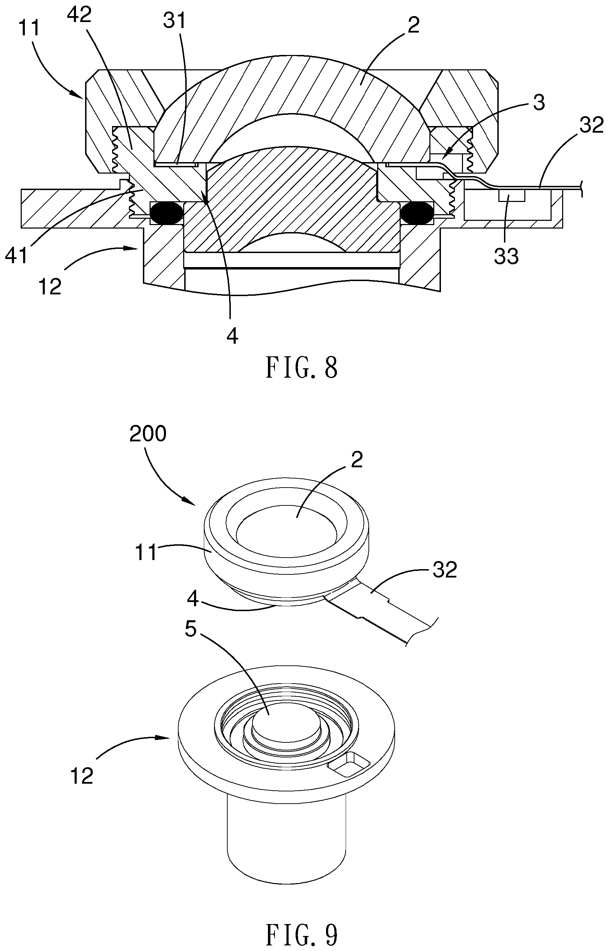

As shown in Figure 8, in the fifth embodiment, the front cover (11) is joined to the annular heat-insulating wall (42) of the heat-insulating block (4), and the cylinder (12) is joined to the annular heat-insulating base (41) of the heat-insulating block (4). The aforementioned connections are preferably implemented through threaded engagement but not limited to such, which can be implemented alternatively through adhesive bonding.

In this fifth embodiment, the front cover (11), the lens (2), the heating device (3) comprises the annular heating plate (31) and the wire portion (32), and the heat-insulating block (4) can be preassembled into a single module (200) (see Figure 9). This single module (200) is also referred to as the front lens module. When maintaining the heating lens of the present invention, it is only necessary to remove the malfunctioned single module (200) and replace it with a new single module (200). Since the single module (200) can be easily and quickly installed or removed from the cylinder (12), the heating lens in this fifth embodiment offers the advantage of easy maintenance.

## Claims

1. A heating lens, comprising:
a lens barrel (1), including a cylinder (12) and a front cover (11);
a lens (2) disposed between the cylinder (12) and the front cover (11) and having an annular wall (21) and an annular bottom wall (22) adjacent to the annular wall (21);
a heating device (3), including an annular heating plate (31) disposed on the annular bottom wall (22) of the lens (2) and a wire portion (32) connected to the annular heating plate (31); and
a heat-insulating block (4), which is an integrally formed member located between the cylinder (12) and the lens (2), wherein the heat-insulating block (4) includes:
an annular heat-insulating base (41) located at the cylinder (12);
an annular heat-insulating wall (42) standing on the annular heat-insulating base (41);
an annular heat-insulating upper flange (43) standing on the annular heat-insulating base (41) and positioned opposite to the annular heat-insulating wall (42); and
an annular slot (44) formed between the annular heat-insulating wall (42) and the annular heat-insulating upper flange (43), wherein the annular heat-insulating wall (42) is in contact with the lens (2), the annular heat-insulating upper flange (43) is located below the annular bottom wall (22) of the lens (2), and the annular slot (44) accommodates the annular heating plate (31).

2. The heating lens of Claim 1, wherein the annular heat-insulating wall (42) is in contact with the annular wall (21) of the lens (2).

3. The heating lens of Claim 1, wherein the annular heating plate (31) further includes an upwardly protruding ring portion (311), the ring portion (311) surrounding and is in contact with the annular wall (21) of the lens (2), the annular heat-insulating wall (42) surrounding the ring portion (311) and is partially in contact with the annular wall (21).

4. The heating lens of Claim 1, wherein one side of the heat-insulating block (4) has an aperture (40) communicating with the annular slot (44), and the wire portion (32) of the heating device (3) passes through the aperture (40) and extends to the outside of the lens barrel (1).

5. The heating lens of Claim 1, wherein an annular outer wall (421) of the annular heat-insulating wall (42) abuts the front cover (11), and an annular inner wall (422) of the annular heat-insulating wall (42) abuts the annular wall (21) of the lens (2).

6. The heating lens of Claim 5, wherein an annular bottom surface (411) of the annular heat-insulating base (41) abuts an annular top surface (121a) of the cylinder (12).

7. The heating lens of Claim 6, wherein an annular heat-insulating lower flange (412) of the annular heat-insulating base (41) protrudes downwardly from the annular bottom surface (411) and abuts an annular side surface (121b) of the cylinder (12).

8. The heating lens of Claim 1, wherein the annular heat-insulating wall (42) is in simultaneous contact with both the annular wall (21) and the annular bottom wall (22) of the lens (2).

9. The heating lens of Claim 1, wherein the front cover (11) is joined to the annular heat-insulating wall (42) of the heat-insulating block (4), and the cylinder (12) is joined to the annular heat-insulating base (41) of the heat-insulating block (4).

10. The heating lens of Claim 1, wherein the front cover (11) is threadedly engaged with the annular heat-insulating wall (42) of the heat-insulating block (4), and the cylinder (12) is threadedly engaged with the annular heat-insulating base (41) of the heat-insulating block (4).
